(19) Europäisches Patentamt
European Patent Office
Office européen des brevets

(11) Veröffentlichungsnummer: **0 402 886 B1**

# (12) EUROPÄISCHE PATENTSCHRIFT

(45) Veröffentlichungstag der Patentschrift: **20.04.94**

(51) Int. Cl.[5]: **C04B 41/84**, C04B 41/86, C23C 18/12

(21) Anmeldenummer: **90111168.2**

(22) Anmeldetag: **13.06.90**

## (54) Beschichtungsmassen auf der Basis von (Poly)borosiloxanen und Verfahren zur Herstellung von gläsernen Überzügen sowie deren Verwendung.

(30) Priorität: **16.06.89 DE 3919786**

(43) Veröffentlichungstag der Anmeldung:
**19.12.90 Patentblatt 90/51**

(45) Bekanntmachung des Hinweises auf die Patenterteilung:
**20.04.94 Patentblatt 94/16**

(84) Benannte Vertragsstaaten:
**BE DE FR GB IT NL SE**

(56) Entgegenhaltungen:
**GB-A- 1 166 992**
**GB-A- 2 028 682**
**US-A- 4 425 387**

**CHEMICAL ABSTRACTS, vol. 104, no. 26, Juni 1986 Columbus, Ohio, USA Seite 283; ref. no. 229359N & JP-60251322 (Matsushita Electric co9(12.12.1985)**

**CHEMICAL ABSTRACTS, vol. 101, no. 2, Juli 1984 Columbus, Ohio, USA Seite 254; ref. no. 11499Z & JP-A-5930786 (Agency of Ind. Sci. & Tech) (18.02.1984)**

**CHEMICAL ABSTRACTS, vol. 106, no. 8, Februar 1987 Columbus, Ohio, USA Seite 289; ref. no. 54715N & JP-A-61191583 (Y. Mizukoshi) (26.08.1986)**

(73) Patentinhaber: **WACKER-CHEMIE GMBH**
**Hanns-Seidel-Platz 4**
**D-81737 München(DE)**

(72) Erfinder: **Kalchauer, Wilfried, Dr.Dipl.-Chem.**
**Bachstrasse 14**
**D-8263 Burghausen(DE)**
Erfinder: **Graf, Werner Dr.Dipl.-Chem.**
**Ludwig-Thoma-Strasse 21**
**D-8263 Burghausen(DE)**
Erfinder: **Pachaly, Bernd, Dr.Dipl.-Chem.**
**Robert-Koch-Strasse 167**
**D-8263 Burghausen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft Beschichtungsmassen auf der Basis von (Poly)borosiloxanen und ein Verfahren zur Herstellung von gläsernen Überzügen sowie deren Verwendung als Schutzschichten.

Dem Schutz von Werkstoffen, wie Metallen, Keramik und kohlenstoffhaltigen Substanzen, die insbesondere bei höheren Temperaturen eingesetzt werden können, kommt in steigendem Maße Beachtung zu. Speziell zum Schutz vor Oxidation werden solche Werkstoffe - hauptsächlich Metalle und CFC (Carbon Fiber Reinforced Carbon) - mit keramischen Schichten, wie beispielsweise SiC-Schichten, versehen. Aufgrund der meist sehr unterschiedlichen Ausdehnungskoeffizienten (Substrat/Keramik) kommt es im allgemeinen bei thermischen Belastungen zu Mikrorissen in der Schutzschicht, durch die die Korrosion des Werkstoffs fördernde Substanzen, wie Luftsauerstoff, Säuren etc., eindringen können. Dieses Problem kann zum Teil durch den Einsatz von Schutzschichten aus Glas behoben werden.

Die Herstellung von gläsernen SchUtzschichten auf Werkstoffen aus Metall, Keramik oder kohlenstoffhaltigen Substanzen ist bereits bekannt. In GB-PS 1,134,756 (Battelle Memorial Institute; ausgegeben am 27. November 1968) wird ein Verfahren zur Herstellung einer gläsernen Schutzschicht beschrieben, bei dem eine Lösung von Polyborosiloxanen in einem inerten Lösungsmittel auf die zu schützende Oberfläche aufgetragen wird. Nach Entfernen des Lösungsmittels wird die Schicht einer Hitzebehandlung unterzogen. Dieses Verfahren hat den Nachteil, daß zum einen immer Lösungsmittel verwendet werden muß und zum anderen die entstandenen Glasschichten eine nur ungenügende mechanische Stabilität sowie eine geringe Temperaturwechselbeständigkeit aufweisen. In DE-PS 29 30 557 (Yajima, Seihi; The Research Institute for Special Inorganic Materials; ausgegeben am 11. März 1982) bzw. den entsprechenden US-PS 4,267,210 und US-PS 4,267,211 wird eine Beschichtungsmasse zur Herstellung eines korrosions-, hitze-und oxidationsbeständigen Materials beansprucht, welches aus einer Organoborosiloxanverbindung, die mit aliphatischen und aromatischen Alkoholen, Phenolen und aromatischen Carbonsäuren oder mit Übergangs-, Aktinoiden-, Lanthancidenmetallen, Legierungen dieser Metalle, Persulfatsalzen, organischen Peroxiden und Halogeniden von Al, Fe, B, Ga und In modifiziert worden ist, besteht. Die modifizierte Organoborosiloxanverbindung, die in einer in bezug auf die Umsetzung inerten bzw. nichtoxidierenden Atmosphäre und bei einer hohen Temperatur hergestellt werden muß, wird in einem organischen Lösungsmittel gelöst, auf das zu schützende Substrat aufgetragen und hitzebehandelt.

Es bestand die Aufgabe, Beschichtungsmassen sowie ein Verfahren bereitzustellen, die es erlauben, auf relativ einfache Weise und mit großer Flexibilität gläserne Überzüge mit einer hohen Stabilität gegen chemische und physikalische Einflüsse, einer hohen Temperaturwechselbeständigkeit und einer guten Haftung auf dem jeweiligen Substrat sowie einer guten Abdichtung desselben herzustellen.

Gegenstand der Erfindung sind Beschichtungsmassen auf der Basis von (Poly)borosiloxanen, dadurch gekennzeichnet, daß die Massen zusätzlich zu (Poly)borosiloxan, welches das Umsetzungsprodukt eines Organo(poly)siloxans aus Einheiten der allgemeinen Formel

$$R_aSi(OR^1)_bO_{\frac{4-a-b}{2}} ,$$

wobei R gleiche oder verschiedene, gegebenenfalls substituierte Kohlenwasserstoffreste und $R^1$ gleiche oder verschiedene aliphatische Kohlenwasserstoffreste oder Wasserstoff bedeutet, mit der Maßgabe, daß höchstens 5 Gewichtsprozent, bezogen auf das Gewicht des jeweils eingesetzten Organo(poly)siloxans, an Si-gebundenen Hydroxylgruppen vorhanden sind, a 0, 1, 2 oder 3, b 0, 1, 2 oder 3, durchschnittlich 0,1 bis 2,5, und die Summe aus a und b durchschnittlich 1 bis 2,8 ist, mit zumindest einer Borverbindung, ausgewählt aus der Gruppe Borsäure, Borsäureanhydrid, Metallsalz der Borsäure, Borsäureester und Borhalogenid, bei einer Temperatur von 0 bis 150 °C ist, (A)

(B) 0 bis 90 Gewichtsprozent einer Bleiverbindung, ausgewählt aus der Gruppe der Bleioxide und der Bleiverbindungen, die bei Temperaturen bis 1500 °C in Gegenwart von Luftsauerstoff Bleioxide bilden,

(C) 0 bis 90 Gewichtsprozent einer Borverbindung, ausgewählt aus der Gruppe der Boroxide und der Borverbindungen, die bei Temperaturen bis 1500 °C in Gegenwart von Luftsauerstoff Boroxide bilden, (Poly)borosiloxan ausgenommen,

(D) 0 bis 50 Gewichtsprozent Talkum,

(E) 0 bis 90 Gewichtsprozent Aluminiumverbindung, ausgewählt aus der Gruppe der Aluminiumoxide und der Aluminiumverbindungen, die bei Temperaturen bis 1500 °C in Gegenwart von Luftsauerstoff Aluminiumoxide bilden, und

(F) 0 bis 600 Gewichtsprozent eines Lösungsmittels,

jeweils bezogen auf das Gewicht an eingesetztem (Poly)borosiloxan (A), enthalten, mit der Maßgabe, daß die Beschichtungsmassen mindestens zwei der Komponenten (B), (C), (D) und (E) mit einem Gewichtsanteil von insgesamt mindestens 20 Prozent, bezogen auf das Gewicht an eingesetztem (Poly)borosiloxan (A), enthalten.

Verfahren zur Herstellung des erfindungsgemäß eingesetzten (Poly)borosiloxans (A) sind an sich bekannt. Hierzu sei beispielsweise auf W. Noll, "Chemie und Technologie der Silicone", Verlag Chemie, Weinheim, 2. Aufl., 1986, Seite 289 ff und US-PS 4 425 387 (W. Graf, Wacker-Chemie GmbH; ausgegeben am 10. Januar 1984) verwiesen.

Besonders bevorzugte Reste $R^1$ sind Kohlenwasserstoffreste mit 1 bis 6 Kohlenstoffatom(en), insbesondere der Methyl- und der Ethylrest.

Beispiele für Reste $R^1$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentyl- und der n-Hexylrest, Alkenylreste, wie der Vinyl- und der Allylrest, Cycloalkylreste, wie der Cyclopentyl- und der Cyclohexylrest sowie der Phenylrest.

Besonders bevorzugte Reste R sind Kohlenwasserstoffreste mit 1 bis 10 Kohlenstoffatom(en), insbesondere der Methylrest.

Die Beispiele für Kohlenwasserstoffreste $R^1$ gelten in vollem Umfang auch für Kohlenwasserstoffreste R. Weitere Bespiele für Kohlenwasserstoffreste R sind Alkylreste mit 7 bis 10 Kohlenstoffatomen, wie der n-Heptyl-, n-Oktyl-, iso-Oktyl-, 2,2,4-Trimethylpentyl-, n-Nonyl- und der n-Decylrest, Cycloalkylreste, wie der Cycloheptyl- und der Methylcyclohexylrest, Alkarylreste, wie der o-, m-, p-Tolylrest, der Xylyl-und der Ethylphenylrest, Aralkylreste, wie der Benzylrest, der $\alpha$- und der ß-Phenylethylrest.

Beispiele für substituierte Kohlenwasserstoffreste R sind halogenierte Kohlenwasserstoffreste, wie der 3,3,3-Trifluorpropylrest und o-, m- und p-Chlorphenylreste und Reste mit -COOC-Gruppierungen, wie der gamma-Methacryloxypropylrest.

Wegen der leichteren Zugänglichkeit sind jedoch vorzugsweise mindestens 80 % der Anzahl der SiC-gebundenen organischen Reste Methylreste.

Die zur Herstellung der erfindungsgemäß eingesetzten (Poly)borosiloxane (A) verwendeten Organo(poly)siloxane haben vorzugsweise eine Viskosität von 1 bis 50 $mm^2/s$, besonders bevorzugt von 3 bis 30 $mm^2/s$.

Diese Organo(poly)siloxane sind handelsübliche Produkte bzw. durch einfache Verfahren, wie in W. Noll, "Chemistry and Technology of Silicones", Academic Press, Orlando, 1968, beschrieben, leicht zugänglich.

Beispiele für die zur Herstellung der erfindungsgemäß eingesetzten (Poly)borosiloxane (A) verwendeten Borverbindungen sind Borsäure, Borsäureanhydrid und Phenylborsäure.

Besonders bevorzugt werden Borsäure und Borsäureanhydrid eingesetzt.

Zur Herstellung des erfindungsgemäß eingesetzten (Poly)borosiloxans (A) wird Borverbindung vorzugsweise in Mengen von 0,1 bis 30 Gewichtsprozent, besonders bevorzugt 3 bis 10 Gewichtsprozent, jeweils bezogen auf das Gewicht an Organo(poly)siloxan, eingesetzt.

Die Herstellung des erfindungsgemäß eingesetzten (Poly)borosiloxans (A) wird bei einer Temperatur von 0 bis 150 °C, insbesondere 50 bis 120 °C, und bei einem Druck von 900 bis 1100 hPa durchgeführt.

Bei dem erfindungsgemäß eingesetzten (Poly)borosiloxan (A) kann es sich um eine einzelne Art von (Poly)borosiloxan handeln. Es kann sich aber auch um ein Gemisch aus mindestens zwei verschiedenen Arten derartiger (Poly)borosiloxane handeln.

Bei der erfindungsgemäß eingesetzten Bleiverbindung (B) handelt es sich um Bleioxide, wie PbO und $Pb_3O_4$, sowie um Bleiverbindungen, die bei Temperaturen bis 1500 °C, bevorzugt bis 800 °C, in Gegenwart von Luftsauerstoff Bleioxide bilden, wie beispielsweise PbS, $Pb(NO_3)_2$, $Pb(OH)_2$, $PbCO_3$.

Bei der erfindungsgemäß eingesetzten Bleiverbindung (B) handelt es sich bevorzugt um PbO.

Die erfindungsgemäße Beschichtungsmasse enthält Bleiverbindung (B) in Mengen von 0 bis 90 Gewichtsprozent, bevorzugt 10 bis 50 Gewichtsprozent, besonders bevorzugt 25 bis 35 Gewichtsprozent, bezogen auf das Gewicht an eingesetztem (Poly)borosiloxan (A).

Bei der erfindungsgemäß eingesetzten Bleiverbindung (B) kann es sich um eine einzelne Art von Bleiverbindung handeln. Es kann sich aber auch um ein Gemisch von mindestens zwei verschiedenen Arten derartiger Bleiverbindungen handeln.

Bei der erfindungsgemäß eingesetzten Borverbindung (C) handelt es sich um Boroxide, wie $B_2O_3$, sowie Borverbindungen, die bei Temperaturen bis 1500 °C, bevorzugt bis 800 °C, in Gegenwart von Luftsauerstoff Boroxide bilden, (Poly)borosiloxan ausgenommen, wie beispielsweise Borsäure $B(OH)_3$, Kernit $Na_2B_4O_7 \cdot H_2O$, Borax $Na_2B_4O_7 \cdot 10H_2O$; Borocalcit $CaB_4O_7 \cdot 4H_2O$; Boronatrocalcit $NaCaB_5O_9 \cdot 6H_2O$, Colemanit $Ca_2B_6O_{11} \cdot 5H_2O$, Borazit $2Mg_3B_8O_{15} \cdot MgCl_2$, Pandermit $Ca_4B_{10}O_{19} \cdot 7H_2O$ und $Ca_5B_{12}O_{23} \cdot 9H_2O$.

Bei der erfindungsgemäß eingesetzten Borverbindung (C) handelt es sich bevorzugt um $B_2O_3$, $B(OH)_3$ und Natriumsalze der Borsäure, besonders bevorzugt um Kernit, Borax und wasserfreies Natriumtetraborat.

Die erfindungsgemäße Beschichtungsmasse enthält Borverbindung (C) in Mengen von 0 bis 90 Gewichtsprozent, bevorzugt 10 bis 60 Gewichtsprozent, besonders bevorzugt 15 bis 40 Gewichtsprozent, bezogen auf das Gewicht an eingesetztem (Poly)borosiloxan (A).

Bei der erfindungsgemäß eingesetzten Borverbindung (C) kann es sich um eine einzelne Art von Borverbindung handeln. Es kann sich aber auch um ein Gemisch aus mindestens zwei verschiedenen Arten derartiger Borverbindungen handeln.

Die erfindungsgemäße Beschichtungsmasse enthält Talkum (D) in Mengen von 0 bis 50 Gewichtsprozent, bevorzugt 5 bis 35 Gewichtsprozent, besonders bevorzugt von 10 bis 30 Gewichtsprozent, bezogen auf das Gewicht an eingesetztem (Poly)borosiloxan (A).

Bei der erfindungsgemäß eingesetzten Aluminiumverbindung (E) handelt es sich um Aluminiumoxide, wie $Al_2O_3$, sowie um Aluminiumverbindungen, die bei Temperaturen bis 1500 °C, bevorzugt bis 800 °C, in Gegenwart von Luftsauerstoff Aluminiumoxide bilden, wie beispielsweise $AlO(OH)$, $Al(OH)_3$ und $Al_2(SO_4)_3 \cdot 18H_2O$.

Bei der erfindungsgemäß eingesetzten Aluminiumverbindung (E) handelt es sich bevorzugt um $Al_2O_3$.

Die erfindungsgemäße Beschichtungsmasse enthält Aluminiumverbindung (E) in Mengen von 0 bis 90 Gewichtsprozent, bevorzugt 10 bis 60 Gewichtsprozente besonders bevorzugt von 25 bis 40 Gewichtsprozent, bezogen auf das Gewicht an eingesetztem (Poly)borosiloxan (A).

Bei der erfindungsgemäß eingesetzten Aluminiumverbindung (E) kann es sich um eine einzelne Art von Aluminiumverbindung handeln. Es kann sich aber auch um ein Gemisch aus mindestens zwei verschiedenen Arten derartiger Aluminiumverbindungen handeln.

Bei dem erfindungsgemäß eingesetzten Lösungsmittel (F) handelt es sich vorzugsweise um solches, in dem das (Poly)borosiloxan (A) mindestens zu einem Teil, besonders bevorzugt vollständig, löslich ist.

Beispiele für Lösungsmittel (F) sind Alkohole, wie Methanol, Ethanol, n-Propanol, iso-Propanol, n-, sec.- und tert.-Butanol und 2-Butanol, Ester, wie Methylacetät, Ethylacetät, n-und iso-Propylacetät, n-, sec.- und tert.-Butylacetät, Ethylformiat, Glykolsäure-n-butylester und Diethylcarbonat, Ether, wie Dioxan, Tetrahydrofuran, Diethylether, Di-n-propylether, Diisopropylether, Di-n-butylether, Ethylenglycolmonomethylether, Ethylenglycolmonoethylether, Diethylenglycoldimethylether und Anisol, chlorierte Kohlenwasserstoffe, wie Dichlormethan, Trichlormethan, Tetrachlormethan, 1,2-Dichlorethan, Trichlorethylen, Tetrachlorethylen und Chlorbenzol, Kohlenwasserstoffe, wie Pentan, n-Hexan, Hexan-Isomerengemische, Cyclohexan, Heptan, Oktan, Waschbenzin, Petrolether, Benzol, Toluol, Xylole, Ketone, wie Aceton, Methylethylketon und Methylisobutylketon, sowie Pyridin und Nitrobenzol oder Gemische dieser Lösungsmittel.

Bei dem erfindungsgemäß eingesetzten Lösungsmittel (F) handelt es sich besonders bevorzugt um Petrolether, Toluol, Glykolsäure-n-butylester, n-Butylacetat, Isopropanol und Ethanol.

Die erfindungsgemäße Beschichtungsmasse enthält Lösungsmittel (F) in Mengen von 0 bis 600 Gewichtsprozent, bevorzugt 0 bis 300 Gewichtsprozent, besonders bevorzugt 0 bis 150 Gewichtsprozent, bezogen auf das Gewicht an eingesetztem (Poly)borosiloxan (A).

Die erfindungsgemäßen Beschichtungsmassen enthalten mindestens zwei, besonders bevorzugt mindestens drei, der Komponenten (B), (C), (D) und (E) mit einem Gewichtsanteil von insgesamt mindestens 20 Prozent, bevorzugt mindestens 25 Prozent, besonders bevorzugt mindestens 30 Prozent, bezogen auf das Gewicht an eingesetztem (Poly)borosiloxan (A).

Die Herstellung der erfindungsgemäßen Beschichtungsmasse aus den Komponenten (A) bis (F) kann auf beliebige Weise erfolgen. Vorzugsweise werden die Komponenten (B), (C), (D), (E) und gegebenenfalls (F) vermischt, die Mischung bis zu einer mittleren Korngröße von 0,5 bis 10 $\mu$m gemahlen und anschließend mit dem (Poly)borosiloxan (A), gegebenenfalls unter Zusatz von Lösungsmittel (F) vermischt.

Zusätzlich zu den Komponenten (A) bis (F) kann die erfindungsgemäße Beschichtungsmasse weitere Stoffe, wie Pigmente oder Füllstoffe, wie beispielsweise Sand, Quarzmehl, Aluminiumpulver und Siliciumcarbidpulver, enthalten.

Die erfindungsgemäße Beschichtungsmasse wird vorzugsweise in Verfahren zur Herstellung von gläsernen Überzügen eingesetzt.

Bei dem erfindungsgemäßen Verfahren zur Herstellung von gläsernen Überzügen wird die erfindungsgemäße Beschichtungsmasse auf das zu schützende Substrat aufgetragen und einer Hitzebehandlung von

mindestens 500 °C unterzogen.

Das zu schützende Substrat besteht vorzugsweise aus mindestens einem aus Metallen, wie beispielsweise Aluminium, Stahl, Kobalt, Nickel, Kupfer, Zink, Silber, Mangan, Chrom und Titan, kohlenstoffhaltigen Substanzen, wie beispielsweise Graphit und CFC (Carbon Fiber Reinforced Carbon), und keramischen Stoffen, wie beispielsweise $SiO_2$, $Al_2O_3$, BeO, SiC und BN, ausgewählten Material.

Das Auftragen der erfindungsgemäßen Beschichtungsmasse auf das zu schützende Substrat kann in an sich bekannter Weise, wie beispielsweise durch Pinseln, Tauchen, Spritzen, Streichen, Gießen oder Walzen, erfolgen.

Falls die Beschichtungsmasse Lösungsmittel (F) enthält, wird das beschichtete Substrat je nach Menge und Art des Lösungsmittels vorzugsweise 15 Minuten bis zu 24 Stunden lang bei einer Temperatur zwischen 10 und 250 °C getrocknet. Die Trocknung kann bezogen auf die Beschichtungsmasse sowohl in inerter Atmosphäre, wie zum Beispiel Argon- oder Stickstoff-atmosphäre oder Vakuum, als auch in reaktiver Atmosphäre, wie beispielsweise Luft oder mit Wasserdampf gesättigte Luft, durchgeführt werden, wobei die Trocknung in Anwesenheit von Luft bei einem Druck zwischen 900 und 1100 hpa besonders bevorzugt wird.

Anschließend wird bei dem erfindungsgemäßen Verfahren das beschichtete Substrat, wobei die Beschichtungsmasse gegebenenfalls durch Einwirken von Wasserdampf gehärtet worden ist, in bezogen auf die Beschichtungsmasse inerter oder reaktiver Atmosphäre hitzebehandelt.

Vorzugsweise wird die Hitzebehandlung in Anwesenheit von Luft bei einem Druck zwischen 900 und 1100 hpa durchgeführt. Die angewandten Temperaturen können dabei je nach dem Material, aus dem das Substrat besteht, variieren.

Vorzugsweise wird das beschichtete Substrat auf eine Temperatur zwischen 500 und 1500 °C erhitzt, wobei Temperaturen zwischen 600 und 1300 °C besonders bevorzugt sind.

Die nach dem erfindungsgemäßen Verfahren hergestellten Glasschichten bilden sich innerhalb kurzer Zeit, so daß keine merkliche Schädigung des Substrats durch Luftsauerstoff erfolgt, und weisen im allgemeinen keine Poren auf. Sie haben vorzugsweise eine Dicke von 5 bis 500 µm, besonders bevorzugt von 20 bis 200 µm.

Die Eigenschaften der erfindungsgemäß hergestellten Glasschichten können ganz gezielt, den gestellten Anforderungen entsprechend über die Zusammensetzung der erfindungsgemäßen Beschichtungsmasse eingestellt werden. Beispielsweise verringern Bor- und Aluminiumoxid den Ausdehnungskoeffizienten des Glases und damit dessen Empfindlichkeit gegen rasches Erhitzen und Abkühlen. Des weiteren erhöhen Bleioxid und Natriumoxid, welches beispielsweise bei der Pyrolyse von Borax entsteht, die Schmelzbarkeit des Glases. Durch die hohe Flexibilität bei der erfindungsgemäßen Herstellung von gläsernen Überzügen ergeben sich zahlreiche Anwendungsmöglichkeiten.

Das erfindungsgemäße Verfahren zur Herstellung von gläsernen Überzügen kann überall dort angewendet werden, wo Substrat, welches aus mindestens einem aus Metallen, kohlenstoffhaltigen Substanzen und keramischen Stoffen ausgewahlten Material besteht, gegen chemische und physikalische Einflüsse geschützt werden soll. Es findet insbesondere Verwendung zur Erzeugung thermisch und chemisch beständiger Schutzschichten auf Metallen, Keramik, Glaskeramik, Faserwerkstoffen und Kohlenstoff. Dem Oxidationsschutz und dem Schutz vor mechanischer Beanspruchung von CFC (Carbon Fiber Reinforced Carbon) und Graphit, der Oberflächenversiegelung von porosen Keramik- oder Faserwerkstoffen, dem Abdichten von Oberflächen von keramischen Materialien, welche bei Temperaturen bis etwa 1200 °C eingesetzt werden, wie beispielsweise Heißgaswärmetauschern, und dem Korrosionsschutz von Metallen, wie Eisen, Stahl und Kupfer, kommt dabei eine besondere Bedeutung zu.

Kohlenstoffhaltige Substrate, wie zum Beispiel Graphit und CFC (Carbon Fiber Reinforced Carbon), werden vorzugsweise durch Aufbringen einer SiC-Schicht vorbehandelt. Das Aufbringen der SiC-Schicht kann nach an sich bekannter Weise erfolgen, wie zum Beispiel nach einem Verfahren gemäß der deutschen Anmeldung mit dem Aktenzeichen P 38 111 567.0 (W. Kalchauer, Wacker-Chemie GmbH; angemeldet am 7. April 1988). Dabei wird Organopolysilan, welches dadurch hergestellt wird, daß Si-Si-Bindungen enthaltende Siliciumverbindung, die zumindest einen Rest der Formel -OR, wobei R Wasserstoff oder Alkylrest bedeutet, enthält, in Gegenwart von Borsäure umgesetzt wird, auf das kohlenstoffhaltige Substrat aufgebracht und in inerter Atmosphäre bei Temperaturen zwischen 700 und 1500 °C beziehungsweise in reaktiver Atmosphäre bei Temperaturen zwischen 200 und 700 °C umgesetzt.

Die nach dem erfindungsgemäßen Verfahren hergestellten Glasschichten haften auf dem jeweiligen Substrat sehr gut und zeigen eine hohe Temperaturwechselstabilität, wobei in einem Temperaturbereich von 20 °C bis 1000 °C bei einer Temperaturänderung von bis zu 100 °C/s die erfindungsgemäß hergestellte Glasschicht nicht beschädigt wird.

Des weiteren haben die erfindungsgemäß hergestellten Glasschichten den Vorteil, daß im Falle einer Beschädigung die Fehlstellen durch Erhitzen auf mindestens 800 °C beseitigt werden können.

In den folgenden Beispielen beziehen sich alle Angaben von Teilen und Prozentsätzen, soweit nichts anderes angegeben ist, auf das Gewicht. Sämtliche Viskositätsangaben beziehen sich auf eine Temperatur von 20 °C.

Beispiel 1

I) Herstellung von (Poly)borosiloxan (A)

100 Teile eines Organo(poly)siloxans werden mit 3 Teilen einer Borverbindung vermischt und bei den in Tabelle 1 angegebenen Temperaturen zwei Stunden gerührt. Es entsteht eine schwach trübe Lösung, die anschließend filtriert wird. Die näheren Angaben zur Herstellung der (Poly)borosiloxane 1 bis 6 sind Tabelle 1 zu entnehmen.

Tabelle 1:

| Nr. | Organo(poly)-siloxan | Borver-bindung | Reaktions-temperatur | Viskosität des (Poly)boro-siloxans | Borgehalt des (Poly)boro-siloxans |
|---|---|---|---|---|---|
| 1 | $CH_3Si(OC_2H_5)_{0,8}O_{1,1}$ 1) | $B_2O_3$ | 120°C | 85 $mm^2/s$ | 0,6 % |
| 2 | -"- 1) | $B(OH)_3$ | 120°C | 65 $mm^2/s$ | 0,4 % |
| 3 | $CH_3Si(OCH_3)_{0,9}O_{\frac{2,1}{2}}$ 2) | $B_2O_3$ | 70°C | 55 $mm^2/s$ | 0,5 % |
| 4 | -"- 2) | $B(OH)_3$ | 70°C | 60 $mm^2/s$ | 0,4 % |
| 5 | $Si(OC_2H_5)_{2,2}O_{0,9}$ 3) | $B_2O_3$ | 100°C | 5 $mm^2/s$ | 0,4 % |
| 6 | -"- 3) | $B(OH)_3$ | 100°C | 6 $mm^2/s$ | 0,3 % |

1) Viskosität: 25 $mm^2/s$; käuflich erhältlich unter dem Handelsnamen "Trasil" bei der Wacker-Chemie GmbH, D-München.

2) Viskosität: 20 $mm^2/s$; käuflich erhältlich unter dem Handelsnamen "Silikat VP 2265" bei der Wacker-Chemie GmbH, D-München.

3) Viskosität: 4 $mm^2/s$; käuflich erhältlich unter dem Handelsnamen "TES 40" bei der Wacker-Chemie GmbH, D-München.

II) Herstellung der Gemische aus den Komponenten (B), (C), (D), (E) und (F)

Die in Tabelle 2 aufgeführten Verbindungen werden in den dort angegebenen Gewichtsverhältnissen vermischt, die Mischung jeweils mit 50 Teilen Isopropanol versetzt und 24 Stunden in einer Kugelmühle gemahlen. Die mittlere Korngröße der einzelnen Mischungen beträgt 3 µm.

Tabelle 2

| Nr. | (B) Teile PbO | ($C_1$) Teile $Na_2B_4O_7 \cdot 10\ H_2O$ | ($C_2$) Teile $Na_2B_4O_7$ | (D) Teile $Mg_3[Si_4O_{10}]_2$ | (E) Teile $Al_2O_3$ |
|---|---|---|---|---|---|
| a | 16,5 | 16,5 | 0 | 17 | 0 |
| b | 22 | 22 | 0 | 6 | 0 |
| c | 22 | 16 | 6 | 6 | 0 |
| d | 27 | 0 | 15 | 8 | 0 |
| e | 16 | 24 | 0 | 10 | 0 |
| f | 20 | 15 | 0 | 15 | 0 |
| g | 17 | 17 | 0 | 16 | 0 |
| h | 0 | 43 | 0 | 7 | 0 |
| i | 43 | 0 | 0 | 7 | 0 |
| j | 25 | 25 | 0 | 0 | 0 |
| m | 0 | 15 | 0 | 13 | 22 |
| n | 0 | 25 | 0 | 12 | 13 |
| o | 0 | 18 | 0 | 19 | 13 |

III) Herstellung der Beschichtungsmassen

Jeweils 100 Teile der unter I) beschriebenen (Poly)borosiloxane 1 bis 6, werden jeweils mit 150 Teilen der unter II) beschriebenen Gemische a bis o vermischt und anschließend jeweils mit Isopropanol so verdünnt, daß die Auslaufzeit nach DIN 53211 (DIN-Becher, 4 mm Düse) 12 bis 14 Sekunden beträgt.

Die so erhaltenen Beschichtungsmassen werden nun auf

- Stahlblech,
- Graphit mit einer nach einem Verfahren gemäß der deutschen Anmeldung mit dem Aktenzeichen P 38 111 567.0 (W. Kalchauer, Wacker-Chemie GmbH; angemeldet am 7. April 1988) hergestellten SiC-Schicht
  und
- CFC (Carbon Fiber Reinforced Carbon) mit einer nach einem Verfahren gemäß der deutschen Anmeldung mit dem Aktenzeichen P 38 111 567.0 (W. Kalchauer, Wacker-Chemie GmbH; angemeldet am 7. April 1988) hergestellten SiC-Schicht.

gespritzt, 20 Stunden bei einer Temperatur von 80 °C in Anwesenheit von Luft getrocknet. Anschließend wird das beschichtete Substrat in einen 1100 °C heißen Ofen eingebracht. Innerhalb von wenigen Sekunden bildet sich bei allen Versuchen eine Glasschicht mit einer Dicke von etwa 30 $\mu$m.

Unabhängig sowohl vom jeweils eingesetzten (Poly)borosiloxan (A) als auch vom jeweils eingesetzten Substrat bilden sich beim Einsatz der Mischungen

- a, b, c, d, e, f, g und j
  hochglänzende, glatte, stark auf dem jeweiligen Substrat haftende gläserne Beschichtungen, in denen teilweise Blasen eingeschlossen sind, die jedoch die Schutzfunktionen der Beschichtungen nicht beeinträchtigen;
- h, m, n und o
  hochglänzende, glatte, stark auf dem jeweiligen Substrat haftende, blasenfreie gläserne Beschichtungen;
- i
  mattglänzende, etwas rauhe, gut auf dem jeweiligen Substrat haftende gläserne Beschichtungen, in denen teilweise Blasen eingeschlossen sind, die jedoch die Schutzfunktionen der Beschichtungen nicht beeinträchtigen.

Sämtliche Probekörper werden nun in Anwesenheit von Luftsauerstoff für zwei Stunden einer Temperatur von 1100 °C ausgesetzt. Anschließend werden die heißen Probekörper dem Ofen entnommen und sofort einer Temperatur von 20 °C ausgesetzt. Die hitzebehandelten Probekörper weisen keine merklichen Schäden auf. Alle Beschichtungen zeigen eine sehr gute Temperaturwechselbeständigkeit.

Beispiel 2

Die (Poly)borosiloxane 1 bis 6 werden nach der in Beispiel 1, I) beschriebenen Verfahrensweise hergestellt.

II) Herstellung der Gemische aus den Komponenten (B), (C), (D) und (E)

Die in Beispiel 1, Tabelle 2 aufgeführten Verbindungen werden in den dort angegebenen Gewichtsverhältnissen vermischt und 12 Stunden in einer Kugelmühle gemahlen. Die mittlere Korngröße der einzelnen Mischungen beträgt 5 $\mu$m.

III) Herstellung der Beschichtungsmassen

Jeweils 100 Teile der (Poly)borosiloxane 1 bis 6 werden jeweils mit 100 Teilen der unter II) beschriebenen Gemische a bis o vermischt.

Die so erhaltenen Beschichtungsmassen werden nun auf

- Stahlblech,
- Graphit mit einer nach einem Verfahren gemäß der deutschen Anmeldung mit dem Aktenzeichen P 38 111 567.0 (W. Kalchauer, Wacker-Chemie GmbH; angemeldet am 7. April 1988) hergestellten SiC-Schicht
  und
- CFC (Carbon Fiber Reinforced Carbon) mit einer nach einem Verfahren gemäß der deutschen Anmeldung mit dem Aktenzeichen P 38 111 567.0 (W. Kalchauer, Wacker-Chemie GmbH; angemeldet am 7. April 1988) hergestellten SiC-Schicht.

gestrichen und anschließend in einen 1000 °C heißen Ofen eingebracht. Innerhalb von wenigen Sekunden bildet sich bei allen Versuchen eine Glasschicht mit einer Dicke von 80 $\mu$m.

Unabhängig sowohl vom jeweils eingesetzten (Poly)borosiloxan (A) als auch vom jeweils eingesetzten Substrat bilden sich beim Einsatz der Mischungen

- a, b, c, d, e, f, g und j
  hochglänzende, glatte, stark auf dem jeweiligen Substrat haftende gläserne Beschichtungen, in denen teilweise Blasen eingeschlossen sind, die jedoch die Schutzfunktionen der Beschichtungen nicht beeinträchtigen;
- h, m, n und o
  hochglänzende, glatte, stark auf dem jeweiligen Substrat haftende, blasenfreie gläserne Beschichtungen;
- i
  mattglänzende, etwas rauhe, gut auf dem jeweiligen Substrat haftende gläserne Beschichtungen, in denen teilweise Blasen eingeschlossen sind, die jedoch die Schutzfunktionen der Beschichtungen nicht beeinträchtigen;

Sämtliche Probekörper werden nun in Anwesenheit von Luftsauerstoff für eine Stunde einer Temperatur von 1000 °C ausgesetzt. Anschließend werden die heißen Probekörper dem Ofen entnommen und sofort einer Temperatur von 20 °C ausgesetzt. Die hitzebehandelten Probekörper weisen keine merklichen Schäden auf. Alle Beschichtungen zeigen eine sehr gute Temperaturwechselbeständigkeit.

## Patentansprüche

**1.** Verfahren zur Herstellung von gläsernen Überzügen, dadurch gekennzeichnet, daß Beschichtungsmassen, die zusätzlich zu (Poly)borosiloxan, welches das Umsetzungsprodukt eines Organo(poly)siloxans aus Einheiten der allgemeinen Formel

$$R_aSi(OR^1)_bO_{\frac{4-a-b}{2}} ,$$

wobei R gleiche oder verschiedene, gegebenenfalls substituierte Kohlenwasserstoffreste und $R^1$ gleiche oder verschiedene aliphatische Kohlenwasserstoffreste oder Wasserstoff bedeutet, mit der Maßgabe,

daß höchstens 5 Gewichtsprozent, bezogen auf das Gewicht des jeweils eingesetzten Organo(poly)-siloxans, an Si-gebundenen Hydroxylgruppen vorhanden sind, a 0, 1, 2 oder 3, b 0, 1, 2 oder 3, durchschnittlich 0,1 bis 2,5, und die Summe aus a und b durchschnittlich 1 bis 2,8 ist, mit zumindest einer Borverbindung, ausgewählt aus der Gruppe Borsäure, Borsäureanhydrid, Metallsalz der Borsäure, Borsäureester und Borhalogenid, bei einer Temperatur von 0 bis 150 °C ist, (A)

(B) 0 bis 90 Gewichtsprozent einer Bleiverbindung, ausgewählt aus der Gruppe der Bleioxide und der Bleiverbindungen, die bei Temperaturen bis 1500 °C in Gegenwart von Luftsauerstoff Bleioxide bilden,

(C) 0 bis 90 Gewichtsprozent einer Borverbindung, ausgewählt aus der Gruppe der Boroxide und der Borverbindungen, die bei Temperaturen bis 1500 °C in Gegenwart von Luftsauerstoff Boroxide bilden, (Poly)borosiloxan ausgenommen,

(D) 0 bis 50 Gewichtsprozent Talkum,

(E) 0 bis 90 Gewichtsprozent Aluminiumverbindung, ausgewählt aus der Gruppe der Aluminiumoxide und der Aluminiumverbindungen, die bei Temperaturen bis 1500 °C in Gegenwart von Luftsauerstoff Aluminiumoxide bilden, und

(F) 0 bis 600 Gewichtsprozent eines Lösungsmittels,

jeweils bezogen auf das Gewicht an eingesetztem (Poly)borosiloxan (A), enthalten, mit der Maßgabe, daß die Beschichtungsmassen mindestens zwei der Komponenten (B), (C), (D) und (E) mit einem Gewichtsanteil von insgesamt mindestens 20 Prozent, bezogen auf das Gewicht an eingesetztem (Poly)borosiloxan (A), enthalten, auf das zu schützende Substrat aufgebracht und einer Hitzebehandlung bei mindestens 500 °C unterzogen wird.

2. Verfahren nach Anspruch 1, dadurch gekennzeichnet, daß das zu schützende Substrat aus mindestens einem aus Metallen, kohlenstoffhaltigen Substanzen und keramischen Stoffen ausgewählten Material besteht.

3. Verfahren nach Anspruch 1, dadurch gekennzeichnet, daß die Hitzebehandlung bei einem Druck zwischen 900 und 1100 hPa durchgeführt wird.

4. Verfahren nach einem oder mehreren der Ansprüche 1 bis 3, dadurch gekennzeichnet, daß die Hitzebehandlung in Anwesenheit von Luft durchgeführt wird.

5. Verfahren nach einem oder mehreren der Ansprüche 1 bis 4, dadurch gekennzeichnet, daß die Hitzebehandlung bei einer Temperatur von 500 bis 1500 °C durchgeführt wird.

6. Beschichtungsmassen auf der Basis von (Poly)borosiloxanen, dadurch gekennzeichnet, daß die Massen zusätzlich zu (Poly)borosiloxan, welches das Umsetzungsprodukt eines Organo(poly)siloxans aus Einheiten der allgemeinen Formel

$$R_aSi(OR^1)_bO_{\frac{4-a-b}{2}} ,$$

wobei R gleiche oder verschiedene, gegebenenfalls substituierte Kohlenwasserstoffreste und $R^1$ gleiche oder verschiedene aliphatische Kohlenwasserstoffreste oder Wasserstoff bedeutet, mit der Maßgabe, daß höchstens 5 Gewichtsprozent, bezogen auf das Gewicht des jeweils eingesetzten Organo(poly)-siloxans, an Si-gebundenen Hydroxylgruppen vorhanden sind, a 0, 1, 2 oder 3, b 0, 1, 2 oder 3, durchschnittlich 0,1 bis 2,5, und die Summe aus a und b durchschnittlich 1 bis 2,8 ist, mit zumindest einer Borverbindung, ausgewählt aus der Gruppe Borsäure, Borsäureanhydrid, Metallsalz der Borsäure, Borsäureester und Borhalogenid, bei einer Temperatur von 0 bis 150 °C ist, (A)

(B) 0 bis 90 Gewichtsprozent einer Bleiverbindung, ausgewählt aus der Gruppe der Bleioxide und der Bleiverbindungen, die bei Temperaturen bis 1500 °C in Gegenwart von Luftsauerstoff Bleioxide bilden,

(C) 0 bis 90 Gewichtsprozent einer Borverbindung, ausgewählt aus der Gruppe der Boroxide und der Borverbindungen, die bei Temperaturen bis 1500 °C in Gegenwart von Luftsauerstoff Boroxide bilden, (Poly)borosiloxan ausgenommen,

(D) 0 bis 50 Gewichtsprozent Talkum,
(E) 0 bis 90 Gewichtsprozent Aluminiumverbindung, ausgewählt aus der Gruppe der Aluminiumoxide und der Aluminiumverbindungen, die bei Temperaturen bis 1500 °C in Gegenwart von Luftsauerstoff Aluminiumoxide bilden, und
(F) 0 bis 600 Gewichtsprozent eines Lösungsmittels,

jeweils bezogen auf das Gewicht an eingesetztem (Poly)borosiloxan (A), enthalten, mit der Maßgabe, daß mindestens zwei der Komponenten (B), (C), (D) und (E) mit einem Gewichtsanteil von insgesamt mindestens 20 Prozent, bezogen auf das Gewicht an eingesetztem (Poly)borosiloxan (A), enthalten sind.

7. Beschichtungsmassen nach Anspruch 6, dadurch gekennzeichnet, daß mindestens drei der Komponenten (B), (C), (D) und (E) mit einem Gewichtsanteil von insgesamt mindestens 20 Prozent, bezogen auf das Gewicht an eingesetztem (Poly)borosiloxan (A), enthalten sind.

## Claims

1. Process for the production of vitreous coatings, characterized in that coating compositions which contain, in addition to (poly)borosiloxane, which is the reaction product of an organo(poly)siloxane consisting of units of the general formula

$$R_aSi(OR^1)_bO_{\frac{4-a-b}{2}} ,$$

in which R are identical or different, substituted or unsubstituted hydrocarbon radicals and $R^1$ are identical or different aliphatic hydrocarbon radicals or hydrogen, with the proviso that at most 5 percent by weight, based on the weight of the organo(poly)siloxane used in each case, of Si-bound hydroxyl groups are present, a is 0, 1, 2 or 3, b is 0, 1, 2 or 3, on average 0.1 to 2.5, and the sum of a and b is on average 1 to 2.8, with at least one boron compound, chosen from the group boric acid, boric anhydride, metal borate, boric acid ester and boron halide, at a temperature from 0 to 150 °C, (A),
(B) 0 to 90 percent by weight of a lead compound, chosen from the group comprising lead oxides and lead compounds which form lead oxides at temperatures of up to 1500 °C in the presence of atmospheric oxygen,
(C) 0 to 90 percent by weight of a boron compound, chosen from the group comprising boron oxides and boron compounds which form boron oxides at temperatures of up to 1500 °C in the presence of atmospheric oxygen, with the exception of (poly)borosiloxane,
(D) 0 to 50 percent by weight of talc,
(E) 0 to 90 percent by weight of an aluminium compound, chosen from the group comprising aluminium oxides and aluminium compounds which form aluminium oxides at temperatures of up to 1500 °C in the presence of atmospheric oxygen, and
(F) 0 to 600 percent by weight of a solvent,

in each case based on the weight of the (poly)borosiloxane (A) employed, with the proviso that the coating compositions contain at least two of the components (B), (C), (D) and (E) in a proportion by weight of in total at least 20 percent, based on the weight of (poly)borosiloxane (A) employed is [sic] applied to the substrate to be protected and subjected to a heat treatment at at least 500 °C.

2. Process according to Claim 1, characterized in that the substrate to be protected consists of at least one material chosen from metals, carbonaceous substances and ceramic materials.

3. Process according to Claim 1, characterized in that the heat treatment is carried out at a pressure between 900 and 1100 hPa.

4. Process according to one or more of Claims 1 to 3, characterized in that the heat treatment is carried out in the presence of air.

5. Process according to one or more of Claims 1 to 4, characterized in that the heat treatment is carried out at a temperature of from 500 to 1500 ° C.

6. Coating compositions based on (poly)borosiloxanes, characterized in that the compositions contain, in addition to (poly)borosiloxane, which is the reaction product of an organo(poly)siloxane consisting of units of the general formula

$$R_aSi(OR^1)_bO_{\frac{4-a-b}{2}} ,$$

in which R are identical or different, substituted or unsubstituted hydrocarbon radicals and $R^1$ are identical or different aliphatic hydrocarbon radicals or hydrogen, with the proviso that at most 5 percent by weight, based on the weight of the organo(poly)siloxane used in each case, of Si-bound hydroxyl groups are present, a is 0, 1, 2 or 3, b is 0, 1, 2 or 3, on average 0.1 to 2.5, and the sum of a and b is on average 1 to 2.8, with at least one boron compound, chosen from the group boric acid, boric anhydride, metal borate, boric acid ester and boron halide, at a temperature from 0 to 150 ° C, (A)

(B) 0 to 90 percent by weight of a lead compound, chosen from the group comprising lead oxides and lead compounds which form lead oxides at temperatures of up to 1500 ° C in the presence of atmospheric oxygen,

(C) 0 to 90 percent by weight of a boron compound, chosen from the group comprising boron oxides and boron compounds which form boron oxides at temperatures of up to 1500 ° C in the presence of atmospheric oxygen, with the exception of (poly)borosiloxane,

(D) 0 to 50 percent by weight of talc,

(E) 0 to 90 percent by weight of an aluminium compound, chosen from the group comprising aluminium oxides and aluminium compounds which form aluminium oxides at temperatures of up to 1500 ° C in the presence of atmospheric oxygen, and

(F) 0 to 600 percent by weight of a solvent,

in each case based on the weight of the (poly)borosiloxane (A) employed, with the proviso that at least two of the components (B), (C), (D) and (E) are contained in a proportion by weight of in total at least 20 percent, based on the weight of (poly)borosiloxane (A) employed.

7. Coating compositions according to Claim 6, characterized in that at least three of the components (B), (C), (D) and (E) are contained in a proportion by weight of in total at least 20 percent, based on the weight of (poly)borosiloxane (A) employed.

## Revendications

1. Procédé pour préparer des revêtements de verre, caractérisé en ce que des compositions de revêtement qui contiennent, en plus d'un polyborosiloxane qui est le produit de la réaction d'un polyorganosiloxane constitué de motifs de formule générale

$$R_aSi(OR^1)_bO_{\frac{4-a-b}{2}} ,$$

dans laquelle R représente des radicaux hydrocarbonés identiques ou différentes, éventuellement substitués, et $R^1$ représente des radicaux hydrocarbonés aliphatiques identiques ou différents, ou encore l'hydrogène, à condition que soient présents au plus 5 % en poids, par rapport au poids du polyorganosiloxane utilisé dans chaque cas, de groupes hydroxyle liés à Si, a vaut 0, 1, 2 ou 3, b vaut 0, 1, 2 ou 3 et en moyenne de 0,1 à 2,5, et la somme de a et b vaut en moyenne de 1 à 2,8, avec au moins un dérivé du bore, choisi parmi l'ensemble comprenant l'acide borique, l'anhydride borique, les sels métalliques de l'acide borique, les esters de l'acide borique et les halogénures de bore, à une température de 0 à 150 ° C, (A),

(B) de 0 à 90 % en poids d'un composé du plomb, choisi parmi l'ensemble comprenant les oxydes de plomb et les composés du plomb qui forment des oxydes de plomb à des températures allant juqu'à 1500 °C, en présence de l'oxygène de l'air,
(C) de 0 à 90 % en poids d'un composé du bore, choisi parmi l'ensemble comprenant les oxydes de bore et les composés du bore qui forment des oxydes de bore à des températures allant jusqu'à 1500 °C, en présence de l'oxygène de l'air, à l'exception du polyborosiloxane,
(D) de 0 à 50 % en poids de talc,
(E) de 0 à 90 % en poids d'un composé de l'aluminium, choisi parmi l'ensemble comprenant les oxydes d'aluminium et les composés de l'aluminium qui forment des oxydes d'aluminium à des températures allant jusqu'à 1500 °C, en présence de l'oxygène de l'air, et
(F) de 0 à 600 % en poids d'un solvant,
les pourcentages étant toujours rapportés au poids du polyborosiloxane utilisé (A), à condition que les compositions d'enduction contiennent au moins deux des composants (B), (C), (D) et (E), en une quantité totale d'au moins 20 % en poids par rapport au poids du polyborosiloxane (A) utilisé, sont appliquées sur le substrat à protéger et sont soumises à un traitement thermique à une température d'au moins 500 °C.

2. Procédé selon la revendication 1, caractérisé en ce que le substrat à protéger est constitué d'au moins un matériau choisi parmi les métaux, les substances carbonées et les substances céramiques.

3. Procédé selon la revendication 1, caractérisé en ce que le traitement thermique est effectué à une température comprise entre 900 et 1100 hPa.

4. Procédé selon l'une ou plusieurs des revendications 1 à 3, caractérisé en ce que le traitement thermique est effectué en présence d'air.

5. Procédé selon l'une ou plusieurs des revendications 1 à 4, caractérisé en ce le traitement thermique est effectué à une température de 500 à 1500 °C.

6. Compositions de revêtement à base de polyborosiloxanes, caractérisée en ce que les compositions contiennent, en plus du polyborosiloxane qui est le produit de la réaction d'un polyorganosiloxane constitué de motifs de formule générale

$$R_aSi(OR^1)_bO_{\frac{4-a-b}{2}} ,$$

dans laquelle R représente des radicaux hydrocarbonés identiques ou différentes, éventuellement substitués, et $R^1$ représente des radicaux hydrocarbonés aliphatiques identiques ou différents, ou encore l'hydrogène, à condition que soient présents au plus 5 % en poids, par rapport au poids du polyorganosiloxane utilisé dans chaque cas, de groupes hydroxyle liés à Si, a vaut 0, 1, 2 ou 3, b vaut 0, 1, 2 ou 3 et en moyenne de 0,1 à 2,5, et la somme de a et b vaut en moyenne de 1 à 2,8, avec au moins un dérivé du bore, choisi parmi l'ensemble comprenant l'acide borique, l'anhydride borique, les sels métalliques de l'acide borique, les esters de l'acide borique et les halogénures de bore, à une température de 0 à 150 °C, (A),
(B) de 0 à 90 % en poids d'un composé du plomb, choisi parmi l'ensemble comprenant les oxydes de plomb et les composés du plomb qui forment des oxydes de plomb à des températures allant juqu'à 1500 °C, en présence de l'oxygène de l'air,
(C) de 0 à 90 % en poids d'un composé du bore, choisi parmi l'ensemble comprenant les oxydes de bore et les composés du bore qui forment des oxydes de bore à des températures allant jusqu'à 1500 °C, en présence de l'oxygène de l'air, à l'exception du polyborosiloxane,
(D) de 0 à 50 % en poids de talc,
(E) de 0 à 90 % en poids d'un composé de l'aluminium, choisi parmi l'ensemble comprenant les oxydes d'aluminium et les composés de l'aluminium qui forment des oxydes d'aluminium à des températures allant jusqu'à 1500 °C, en présence de l'oxygène de l'air, et

(F) de 0 à 600 % en poids d'un solvant,

les pourcentages étant toujours rapportés au poids du polyborosiloxane utilisé (A), à condition que les compositions d'enduction contiennent au moins deux des composants (B), (C), (D) et (E), en une quantité totale d'au moins 20 % en poids par rapport au poids du polyborosiloxane (A) utilisé.

**7.** Compositions de revêtement selon la revendication 6, caractérisées en ce qu'elles contiennent au moins trois des composants (B), (C), (D) et (E), en une quantité totale d'au moins 20 % en poids par rapport au poids du polyborosiloxane (A) utilisé.